# EUROPEAN PATENT SPECIFICATION

(11) **EP 2 879 309 B1**
(45) Date of publication and mention of the grant of the patent: **23.05.2018**
(21) Application number: 12881541.2
(22) Date of filing: 26.07.2012
(51) Int. Cl.: H04B 10/07, H04Q 11/00

(54) **SHARED PROTECTION METHOD, FIRST NODE DEVICE, AND SYSTEM IN OPTICAL TRANSPORT NETWORK**
GEMEINSAMES SCHUTZVERFAHREN, FIRST-NODE-VORRICHTUNG UND SYSTEM IN EINEM OPTISCHEN TRANSPORTNETZ
PROCÉDÉ DE PROTECTION PARTAGÉE, PREMIER DISPOSITIF DE N UD, ET SYSTÈME DANS UN RÉSEAU DE TRANSPORT OPTIQUE

(43) Date of publication of application: 03.06.2015
(73) Proprietor: Huawei Technologies Co., Ltd., Longgang District Shenzhen, Guangdong 518129 (CN)
(72) Inventor: YAN, Jun, Shenzhen Guangdong 518129 (CN)
(74) Representative: Pfenning, Meinig & Partner mbB
(86) International application number: PCT/CN2012/079202
(87) International publication number: WO 2014/015502

(56) References cited:
- EP-A1- 1 777 845
- EP-A1- 2 429 118
- CN-A- 1 753 324
- CN-A- 101 599 798
- CN-A- 102 318 273
- "ODUk Shared Ring Protection (SRP); G.873.2 (04/12)", ITU-T STANDARD, INTERNATIONAL TELECOMMUNICATION UNION, GENEVA ; CH, no. G.873.2 (04/12), 22 April 2012 (2012-04-22), pages 1-112, XP017577986, [retrieved on 2013-03-08]
- MAARTEN VISSERS HUAWEI TECHNOLOGIES CO ET AL: "HO and LO ODUk Shared Ring Protection (SRP);C 533", ITU-T DRAFT ; STUDY PERIOD 2009-2012, INTERNATIONAL TELECOMMUNICATION UNION, GENEVA ; CH, vol. 9/15, 18 September 2009 (2009-09-18), pages 1-7, XP017447231, [retrieved on 2009-09-18]
- "ODUk Shared Ring Protection (SRP); G.873.2 (04/12)", ITU-T STANDARD, INTERNATIONAL TELECOMMUNICATION UNION, GENEVA ; CH, no. G.873.2 (04/12), 22 April 2012 (2012-04-22), pages 1-113, XP017575323, [retrieved on 2012-05-28]

## Description

### TECHNICAL FIELD

The present invention relates to the field of communications technologies, and in particular, to a method, a node device, and a system for shared protection in an optical transport network.

### BACKGROUND

OTN (Optical Transport Network, Optical Transport Network) is a new optical transmission technology, developed based on SONET (Synchronous Optical Network, Synchronous Optical Network)/SDH (Synchronous Digital Hierarchy, Synchronous Digital Hierarchy). With the development of the OTN, people start using various OTN protection methods to effectively improve the service survivability. The OTN protection methods include an ODUk (Optical Data Unit of level k, Optical Channel Data Unit k) shared protection ring, where k indicates a level. Currently, standardized levels are 0, 1, 2, 3, and 4.

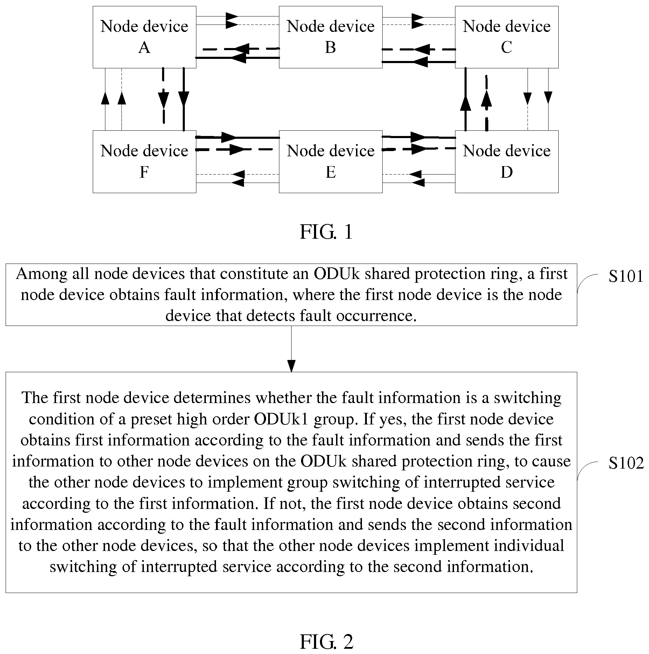

The structure of a current ODUk shared protection ring is shown in FIG. 1, where six node devices (a node device A, a node device B, a node device C, a node device D, a node device E, and a node device F) constitute an ODUk shared protection ring, with each two node devices being connected through an optical fiber. As for the ODUk shared protection ring, when an optical fiber cut occurs between adjacent node devices, service in a large number of protection groups need to be switched simultaneously in theory; but service in a large number of protection groups are bridged and switched through crossing one by one in practice.

During the implementation of the present invention, the inventor finds that the prior art at least has the following problems: In the prior art, when an optical fiber cut occurs, service in a large number of protection groups are bridged and switched through crossing one by one, and processed in a serial manner, slowing down service switching. The recommendation "ODUk Shared Ring Protection (SRP); G.873.2 (04/12)", ITU-T STANDARD, INTERNATIONAL TELECOMMUNICATION UNION, GENEVA ; CH, no. G.873.2 (04/12), 22 April 2012 (2012-04-22), pages 1-113, describes the Automatic Protection Switch, APS, protocol to support ODUk shared ring protection in the OTN. One of the disclosed attributes of the protection, named SRP-p, discloses the protection switching on a per HO ODU bases between all nodes in the ring; a bundle of LO ODU signals is switched when LO ODUk is carried by a HO ODUk around the ring. APS is used for each HO ODUk. The document MAARTEN VISSERS HUAWEI TECHNOLOGIES CO ET AL: "HO and LO ODUk Shared Ring Protection (SRP);C 533", ITU-T DRAFT ; STUDY PERIOD 2009-2012, INTERNATIONAL TELECOMMUNICATION UNION, GENEVA ; CH, vol. 9/15, 18 September 2009 (2009-09-18), pages 1-7, proposes the HO and LO ODUk Shared Ring Protection, SRP where the individual as well as the group switching are disclosed. EP 2429118 A1 discusses a method and a device for realizing an optical channel data unit (ODU) shared protection ring (SPRing). The method includes: A first ODU of a first service transmitted in an optical line is taken as a protection granularity, where the first ODU is an ODUk that is directly multiplexed to the optical line; the first ODU is monitored, and a monitoring result is obtained; when the monitoring result indicates that a failure occurs, a switching is performed through cross of a second ODU of the first service, where the second ODU is an ODUm that is multiplexed to the first ODU, and m is smaller than or equal to k.

EP 1777845 A1 discusses a service protecting method for optical transmission network and node device, and the method includes: a part of optical channels of each optical fiber are set to optical operating channels and used to carry the service which need to be protected, while the same number of optical channels of another optical fiber which has a opposite transmission direction, in which the number is the same as the number of the optical operating channels, are set to optical protecting channels and used to protect the said optical operating channels respectively; when optical line faults are detected in the optical transmission network, bridging and switching nodes are determined by the predetermined protection scheme, and for the service which need to be carried and transmitted by the defective optical line, bridging and switching operation between the optical operating channel and the optical protecting channel is implemented at the determined bridging and switching nodes.

### SUMMARY

Embodiments of the present invention provide a method, a node device, and a system for shared protection in an optical transport network for accelerating the speed of service switching. The technical solutions are as follows:
In one aspect, a method for shared protection in an optical transport network is provided. The method includes:
obtaining, by a first node device, among all node devices that constitute an Optical Channel Data Unit k ODUk shared protection ring, fault information, where the first node device is a node device that detects fault occurrence;
determining, by the first node device, whether the fault information is a switching condition of a preset high order ODUk1 group; if yes, obtaining first information according to the fault information, and sending the first information to other node devices on the ODUk shared protection ring, to the other node devices to implement group switching of interrupted service according to the first information; and
   if not, obtaining, by the first node device, second information according to the fault information, and sending the second information to the other node devices, so that the other node devices implement individual switching of interrupted service according to the second information; wherein the preset high order ODUk1 group comprises N high order ODUk1 sub-groups, wherein all high order ODUk1s of a high order ODUk1 sub-group between any two adjacent node devices on the ODUk shared protection ring use a same optical fiber for transmission and share a same path between a source node device and a sink node device; each of the high order ODUk1 sub-groups has the same number of high order ODUk1s, N is the number of node devices on the ODUk shared protection ring.

In another aspect, a node device is provided. The node device, among all node devices that constitute an Optical Channel Data Unit k ODUk shared protection ring, is a node device that detects fault occurrence. The node device includes:
an obtaining module, configured to obtain fault information; and
a determining and processing module, configured to determine whether the fault information is a switching condition of a preset high order ODUk1 group; if yes, obtain first information according to the fault information and send the first information to other node devices on the ODUk shared protection ring to the other node devices to implement group switching of interrupted service according to the first information; if not, obtain second information according to the fault information and send the second information to the other node devices so that the other node devices implement individual switching of interrupted service according to the second information; wherein the preset high order ODUk1 group comprises N high order ODUk1 sub-groups, wherein all high order ODUk1s of a high order ODUk1 sub-group between any two adjacent node devices on the ODUk shared protection ring use a same optical fiber for transmission and share a same path between the node device and a sink node device; each of the high order ODUk1 sub-groups has the same number of high order ODUkls, N is the number of node devices on the ODUk shared protection ring.

In still another aspect, a system for shared protection in an optical transport network is provided. The system includes a first node device, a second node device, and a third node device. The first node device, the second node device, and the third node device are located on an Optical Channel Data Unit k ODUk shared protection ring, where:
the first node device is configured to obtain fault information and determine whether the fault information is a switching condition of a preset high order ODUk1 group; if yes, the first node device obtains first information according to the fault information and sends the first information to the second node device and the third node device respectively, so that the second node device and the third node device implement group switching of interrupted service according to the first information, where, the second node device is a node device other than the first node device and the third node device on the ODUk shared protection ring, and the third node device is an upstream node device of the first node device; if not, the first node device obtains second information according to the fault information and sends the second information to the second node device and the third node device respectively, so that the second node device and the third node device implement individual switching of interrupted service according to the second information; wherein the preset high order ODUk1 group comprises N high order ODUk1 sub-groups, wherein all high order ODUk1 s of a high order ODUk1 sub-group between any two adjacent node devices on the ODUk shared protection ring use a same optical fiber for transmission and share a same path between the first node device and the second node device; each of the high order ODUk1 sub-groups has the same number of high order ODUk1s, N is the number of node devices on the ODUk shared protection ring.

Beneficial effects of the technical solutions provided in the embodiments of the present invention are as follows: A first node device obtains fault information. When the fault information is a switching condition of a preset high order ODUk1 group, the first node device sends first information to other node devices other than the first node device on the ODUk shared protection ring, to the other node devices to implement group switching of interrupted service according to the first information so as to process interrupted service as a group at the same time, thereby accelerating the speed of service switching; furthermore, when the fault information is not a switching condition of a preset high order ODUk1 group, the first node device sends the second information to the other node devices, so that the other node devices implement individual switching of interrupted service according to the second information so as to switch only affected individual service without affecting normal service, thereby avoiding incorrect switching.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a structural schematic diagram of an ODUk shared protection ring provided in the prior art;
FIG. 2 is a flowchart of a method embodiment for shared protection in an optical transport network according to Embodiment 1 of the present invention;
FIG. 3A and FIG. 3B are a flowchart of a method embodiment for shared protection in an optical transport network according to Embodiment 2 of the present invention;
FIG. 4 is a service schematic diagram of an ODUk shared protection ring according to Embodiment 2 of the present invention;
FIG. 5 is a first structural schematic diagram of a node device embodiment according to Embodiment 3 of the present invention;
FIG. 6 is a second structural schematic diagram of a node device embodiment according to Embodiment 3 of the present invention;
FIG. 7 is a third structural schematic diagram of a node device embodiment according to Embodiment 3 of the present invention; and
FIG. 8 is a structural schematic diagram of a system embodiment for shared protection in an optical transport network according to Embodiment 4 of the present invention.

### DESCRIPTION OF EMBODIMENTS

Embodiments of the present invention provide a method, a node device, and a system for shared protection in an optical transport network.

To make the objectives, technical solutions, and advantages of the present invention more clearly, the following further describes the embodiments of the present invention in detail with reference to the accompanying drawings.

### Embodiment 1

Referring to FIG. 2, FIG. 2 is a flowchart of a method embodiment for shared protection in an optical transport network according to Embodiment 1 of the present invention. In this embodiment, a high order (HO, High Order) ODUk1 and a low order (LO, Low Order) ODUk2 are relative. A high order ODUk1 is an ODUk that is directly encapsulated into an OTUk (Optical Channel Transport Unit k, Optical Channel Transport Unit k)/OCh (Optical Channel, Optical Channel) and transmitted through an optical fiber. Currently, it may be an ODU4, ODU3, ODU2, or ODU1. A low order ODUk2 is an ODUk into which a type of customer signal is directly encapsulated. Currently, it may be an ODU4, ODU3, ODU2, ODU1, ODU0, ODU2e, or ODUflex. Except ODU2e and ODUflex in a low order ODUk2, a k1 in a high order ODUk1 is always greater than or equal to a k2 in a low order ODUk2. For the structure of an ODUk shared protection ring in this embodiment, reference may be made to FIG. 1.

The method for shared protection in an optical transport network includes:
S101: Among all node devices that constitute an ODUk shared protection ring, a first node device obtains fault information, where the first node device is a node device that detects fault occurrence.
S102: The first node device determines whether the fault information is a switching condition of a preset high order ODUk1 group. If yes, the first node device obtains first information according to the fault information and sends the first information to other node devices on the ODUk shared protection ring, to the other node devices to implement group switching of interrupted service according to the first information. If not, the first node device obtains second information according to the fault information and sends the second information to the other node devices, so that the other node devices implement individual switching of interrupted service according to the second information.

In this embodiment, a first node device obtains fault information. When the fault information is a switching condition of a preset high order ODUk1 group, the first node device sends the first information to other node devices other than the first node device on the ODUk shared protection ring, to the other node devices to implement group switching of interrupted service according to the first information so as to process interrupted service as a group at the same time, thereby accelerating the speed of service switching. Furthermore, when the fault information is not a switching condition of a preset high order ODUk1 group, the first node device sends the second information to the other node devices, so that the other node devices implement individual switching of interrupted service according to the second information so as to switch only affected individual service without affecting normal service, thereby avoiding incorrect switching.

### Embodiment 2

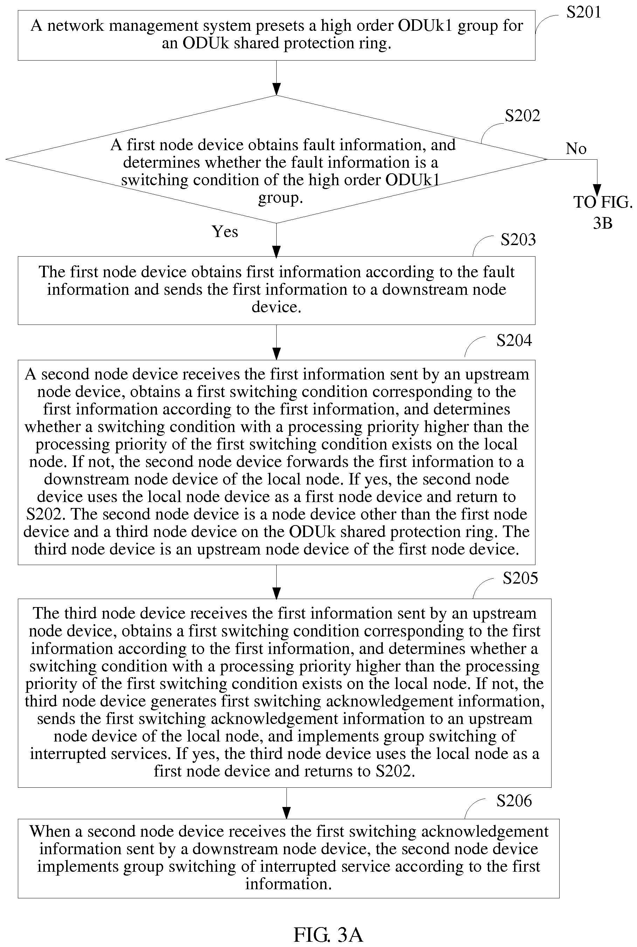

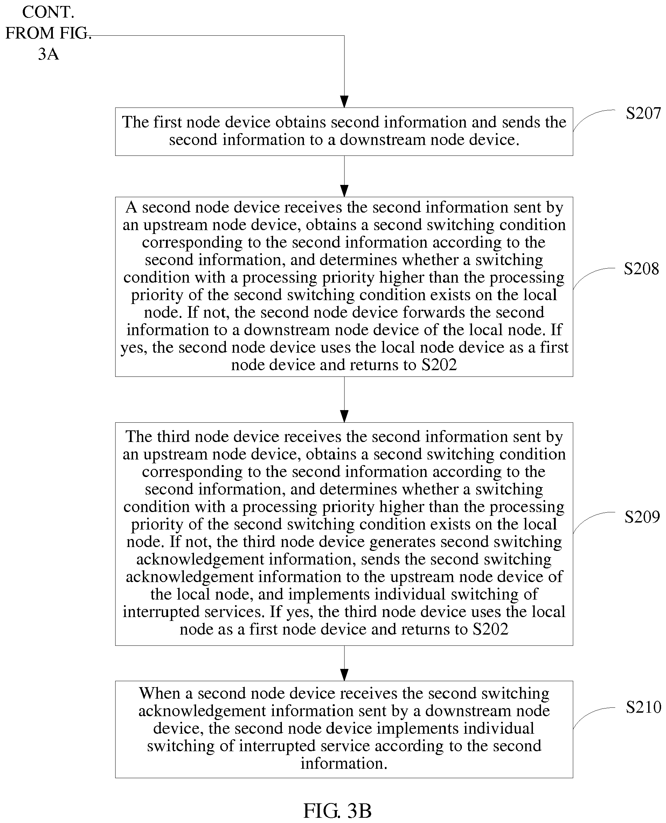

Referring to FIG. 3A and FIG. 3B, FIG. 3A and FIG. 3B are a flowchart of a method embodiment for shared protection in an optical transport network according to Embodiment 2 of the present invention. For the structure of an ODUk shared protection ring in this embodiment, reference may be made to FIG. 1.

The method for shared protection in an optical transport network includes:
S201: A network management system presets a high order ODUk1 group for an ODUk shared protection ring.

On an ODUk shared protection ring of an OTN, the network management system sets a group for high order ODUk1s on an ODUk shared protection ring.

In a span between any two adjacent node devices on an ODUk shared protection ring, the network management system groups high order ODUk1s that are transmitted through a same optical fiber and share a same path between a source node device and a sink node device into a group, and sequentially generates N ODUk1 sub-groups, where N is the number of node devices on the ODUk shared protection ring. The source node device is any node device of the two adjacent node devices, and the other node device of the two adjacent node devices is the sink node device.

When any two adjacent node devices on an ODUk shared protection ring do not have another physical node device in between, high order ODUk1s in a span between the two any adjacent node devices share a same path between a source node device and a sink node device. Therefore, the network management system may directly group high order ODUk1s that are transmitted through a same optical fiber into a group, and sequentially generate N ODUk1 sub-groups.

When any two adjacent node devices on an ODUk shared protection ring have another physical node device in between, for the subnet composed of the any two adjacent node devices and the another physical node device, the network management system groups high order ODUk1s that are in a span between the any two adjacent devices in the subnet, are transmitted through a same optical fiber, and share a same path between a source node device and a sink node device into a group, and sequentially generates N ODUk1 sub-groups. The another physical node device does not belong to the ODUk shared protection ring, and the another physical node device is used only to transmit information but is not used to process the transmitted information. That is, the another physical node device does not participate in protection switching processing, but the another physical node device needs to be considered during setting of a high order ODUk1 group.

That the N high order ODUk1 sub-groups are set to obtain the set N high order ODUk1 sub-groups, specifically is:
a high order ODUk1 sub-group with the fewest high order ODUk1s among the N high order ODUk1 sub-groups are obtained, the high order ODUk1 sub-group with the fewest high order ODUk1s is used as a first high order ODUk1 sub-group, and the number of high order ODUk1s in the first high order ODUk1 sub-group is used as a specified number; and that other high order ODUk1 sub-groups other than the first high order ODUk1 sub-group among the N high order ODUk1 sub-groups are set according to the specified number, specifically is: the specified number of high order ODUk1s are selected from all high order ODUk1s of each of the other high order ODUk1 sub-groups into a group, to obtain the set N high order ODUk1 sub-groups. Hence the set N high order ODUk1 sub-groups have a same number of high order ODUkls.

The set N high order ODUk1 sub-groups are used to form a high order ODuk1 group of an ODUk shared protection ring.

For example, for an ODUk shared protection ring shown in FIG. 1, the ODUk shared protection ring has six node devices, namely a node device A, a node device B, a node device C, a node device D, a node device E, and a node device F. Then, a high order ODUk1 group of the ODUk shared protection ring has six high order ODUk1 sub-groups.

If each high order ODUk1 sub-group has ten high order ODUkls, there are, between any two node devices, ten high order ODUkls that are transmitted through a same optical fiber and share a same path between a source node device and a sink node device. For example, there are, in a span between the node device A and the node device B, ten high order ODUk1s that transmitted through optical fiber X and share a same path between the source node device A and the sink node device B. In addition, because each of the high order ODUk1 sub-groups has the same number of high order ODUk1s, it can be said that the high order ODUk1 group of the ODUk shared protection ring has ten high order ODUk1s for an easy description.

In this embodiment, a user may also set a high order ODUk1 group for an ODUk shared protection ring. A specific method is as described above and the details are not described herein again.

It is taken into consideration that an optical layer ASON function may change routing of each wavelength, that is, rerouting. In this embodiment, when rerouting occurs, a high order ODUk1 group is set again by referring to the aforementioned method for setting a high order ODUk1 group for an ODUk shared protection ring.

S202: A first node device obtains fault information, and determines whether the fault information is a switching condition of the high order ODUk1 group. If yes, the first node device performs S203. If not, the first node device performs S207.

In this step, when a fault occurs on an ODUk shared protection ring, a first node device on the ODUk shared protection ring detects the fault and obtains fault information, where the fault includes but is not limited to a fault on an optical fiber between node devices on the ODUk shared protection ring or a fault on a node device on the ODUk shared protection ring, and the details are not described herein again.

If a fault occurs on an optical fiber between any two node devices on an ODUk shared protection ring, according to the transmission direction of a faulty service, the first node device may be a downstream node device of the aforementioned two node devices. For example, a fiber cut occurs between a node device A and a node device B, additionally the fiber that transmits service from the node device A to the node device B is broken, then the node device B detects fault information, that is, the node device B is the first node device.

Or, if a fault occurs on any node device on an ODUk shared protection ring, the first node device may be the node device on which the fault occurs or a node device that is directly adjacent to the node device on which the fault occurs.

After the first node device obtains fault information, the first node device determines whether the fault information is a switching condition of the high order ODUk1 group, specifically, matches the fault information against each condition of all switching conditions of the high order ODUk1 group. If the match is successful, the fault information is a switching condition of the high order ODUk1 group. If the match is unsuccessful, the fault information is not a switching condition of the high order ODUk1 group. The first node device performs subsequent processing according to the match result.

The switching condition of the high order ODUk1 group is configurable, including the following by default:
An SF (Signal Fail, Signal Fail) condition of a high order ODUk1 group is configurable, including the following by default: OTS_LOS-P (Optical Transmission Section_Loss Of Signal-Payload, Optical Transmission Section_Loss Of Signal-Payload), OMS_LOS-P (Optical Multiplex Section_Loss Of Signal-Payload, Optical Multiplex Section_Loss Of Signal-Payload), or an SF condition existing on working channels/protection channels of any M high order ODUkls, where M is a positive integer and is less than or equal to the number of high order ODUkls in the high order ODUk1 sub-group. An SD (Signal Degrade, Signal Degrade) condition of a high order ODUk1 group is configurable, including IN_PWR_LOW (Input POWER low, input power too low), or an SD condition existing on working channels/protection channels of any M high order ODUk1s.

Another drawback of an OTS layer and an OMS layer may be configured as an SF condition or an SD condition of a group, where M in SF/SD conditions of of working channels/protection channels M high order ODUkls is configurable. An SD condition may be configured to enable or prohibit triggering of switching.

When a match between the fault information and the switching condition of the high order ODUk1 group is successful, the first node device obtains a condition type to which the fault information belongs, where the condition type includes an SF condition of the high order ODUk1 group or an SD condition of the high order ODUk1 group.

S203: The first node device obtains first information according to the fault information and sends the first information to a downstream node device.

In this step, when the fault information is a switching condition of the high order ODUk1 group, the first node device obtains faulty link information according to the fault information, where the faulty link information is used to indicate a link where a fault occurs. The first node device constructs first information by using the faulty link information and a first information identifier, where the first information identifier is used to uniquely identify an attribute of the first information and the first information identifier is information about group switching. The first information may also include the condition type, and a second node device may perform, according to the processing priority of the condition type, a corresponding operation, where the processing priority of an SF condition is higher than the processing priority of an SD condition.

For example, if a fiber that transmits service from a node device A to a node device B is broken, the node device B (that is, a first node device) obtains fault information. When the fault information is a switching condition of the high order ODUk1 group, the node device B obtains, according to the fault information, faulty link information indicating that a fault occurs on a link between the node device A and the node device B. The node device B constructs first information by using the faulty link information and a first information identifier, and sends the first information to a downstream node device, that is, a node device C, where the first information identifier is information about group switching.

In this embodiment, the first node device configures, according to the first information, high order ODUk1s in high order ODUk1 sub-groups of the receive direction and the transmit direction of the first node device itself.

S204: A second node device receives the first information sent by an upstream node device, obtains a first switching condition corresponding to the first information according to the first information, and determines whether a switching condition with a processing priority higher than the processing priority of the first switching condition exists on the local node. If not, the second node device forwards the first information to a downstream node device of the local node. If yes, the second node device uses the local node device as a first node device and returns to S202. The second node device is a node device other than the first node device and a third node device on the ODUk shared protection ring. The third node device is an upstream node device of the first node device.

In this embodiment, it is assumed that a fiber that transmits service between a node device A and a node device B is broken, additionally service on which a fault occurs are transmitted in a direction from the node device A to the node device B. Then, the node device B is regarded as the first node device; because service are transmitted from the node device A to the node device B, the node device A is an upstream node device of the node device B and hence the node device A is used as the third node device. Node devices C, D, E, and F are second node devices.

After the node device B sends the first information to the node device C, the node device C receives the first information sent by the node device B, and obtains a first switching condition corresponding to the first information according to the first information; specifically, the node device C obtains a first information identifier according to the first information, where the first information identifier is information about group switching, indicating that the first switching condition corresponding to the first information is a group switching condition. After obtaining the first information identifier, the node device C may obtain a condition type according to the first information, where the condition type includes an SF condition of the high order ODUk1 group or SD condition of the high order ODUk1 group, indicating that the first switching condition corresponding to the first information is a group switching SF condition or a group switching SD condition.

In this embodiment, preferably, the processing priority of a group switching condition is higher than the processing priority of an individual switching condition, the processing priority of a group SF condition is higher than the processing priority of a group SD condition, and the processing priority of an individual SF condition is higher than the processing priority of an individual SD condition. For details about the individual switching condition, reference may be made to detailed descriptions in the aftermentioned steps S207 to S210 and the details are not described herein.

After obtaining the first switching condition corresponding to the first information, the node device C determines whether a switching condition with a processing priority higher than the processing priority of the first switching condition exists on the local node. If not, the node device C forwards the first information to a downstream node device, a node device D, of the local node. If yes, the node device C uses the local node device C as a first node device and returns to S202 to perform a corresponding process, where the first information is information corresponding to the switching condition (for example, a local switching condition K) with a processing priority higher than the processing priority of the first switching condition but is not information corresponding to the first switching condition.

The node devices D, E and F have a similar processing process to that of the node device C and the details are not described herein. For details, reference may be made to descriptions above.

S205: The third node device receives the first information sent by an upstream node device, obtains a first switching condition corresponding to the first information according to the first information, and determines whether a switching condition with a processing priority higher than the processing priority of the first switching condition exists on the local node. If not, the third node device generates first switching acknowledgement information, sends the first switching acknowledgement information to an upstream node device of the local node, and implements group switching of interrupted service. If yes, the third node device uses the local node as a first node device and returns to S202.

The first switching acknowledgement information in this embodiment is used to notify a second node device that the first switching condition is a switching condition that has the highest processing priority on the second node device and the third node device, and that the second node device may perform switching for the first information.

The node device A (that is, the third node device) receives the first information sent by the node device F, obtains a first switching condition corresponding to the first information according to the first information, and determines whether a switching condition with a processing priority higher than the processing priority of the first switching condition exists on the local node. If not, the node device A generates first switching acknowledgement information, sends the first switching acknowledgement information to the upstream node device of the local node, that is, the node device F. If yes, the node device A uses the node device A as a first node device; after the local node, being a first node device, obtains first information, the first information is transmitted to the node devices F, E, D, C, and B in the specified sequence, where node devices F, E, D and C are second node devices and the node device B is a third node device. For its processing process, reference may be made to aforementioned descriptions.

When the node device A does not have a switching condition with a processing priority higher than the processing priority of the first switching condition, the node device A obtains first interrupted service information according to the first information, and configures high order ODUk1s in the high order ODUk1 group according to the first interrupted service information to implement group switching of interrupted service; specifically, configures high order ODUk1s of the high order ODUk1 sub-group in an FA span, that is, the node device A configures protection channels in the receive direction and the transmit direction.

S206: When a second node device receives the first switching acknowledgement information sent by a downstream node device, the second node device implements group switching of interrupted service according to the first information.

In this step, when the second node device receives the first switching acknowledgement information sent by the downstream node device, the second node device confirms that the processing priority of the first switching condition corresponding to the first information is the highest on the second node device and the third node device and that processing corresponding to the first information may be triggered. Specifically, the second node device obtains first interrupted service information according to the first information, and configures high order ODUkls in the high order ODUk1 group according to the first interrupted service information to implement group switching of interrupted service.

The node devices E, D and C have a similar processing process to that of the node device F. The following uses the node device F as an example to describe details about the processing process.

When the node device F receives a first switching acknowledgement information sent by the node device A, the node device F obtains, from the first information, information where a first information identifier indicates group switching, indicating that the first information is information about group switching and that the local node performs group switching. The node device F obtains the faulty link information from the first information, for example, the first interrupted service information indicating that a fault occurs on the link from the node device A to the node device B; queries a node service condition table of the local node device according to the faulty link information to obtain the first interrupted service information.

The node service condition table is shown in Table 1.

**Table 1**

| **Service source node device** | **Intermediate node device** | **Service sink node device** | **Service level** | **Service quantity** |
|---|---|---|---|---|
| A | None | B | ODU2 | 30 |
| A | B | C | ODU1 | 40 |
| A | None | F | ODU0 | 320 |
| F | E | D | ODU1 | 80 |
| E | None | D | ODU2 | 20 |
| D | None | C | ODU1 | 80 |
| D | None | C | ODU3 | 5 |

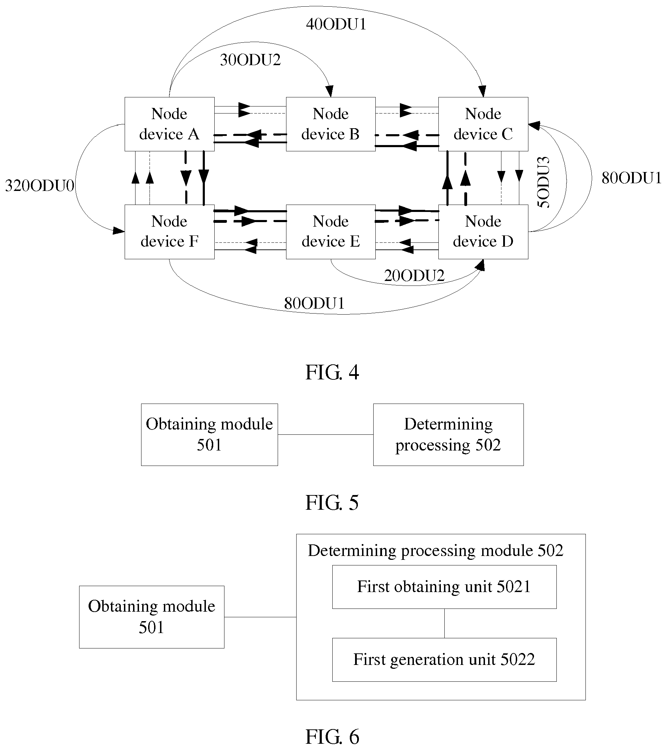

In this embodiment, an ODUO service, an ODU1 service, an ODU2 service, and an ODU3 service are used as low order ODUk2 service, and an ODU3 service is used as a high order ODUk1 service, as shown in Table 1. For a service schematic diagram of an ODUk shared protection ring corresponding to Table 1, reference may be made to FIG. 4. FIG. 4 is a service schematic diagram of an ODUk shared protection ring according to Embodiment 2.

Table 1 is only an example of this embodiment, and this embodiment is not limited herein and the details are not described herein again.

Each node device has a node service condition table shown in Table 1. When a service configuration condition changes, a node device maintains and updates the node service condition table.

Preferably, the node service condition table may also include a service protection individual, that is, a high order ODUk1 that protects a low order ODUk2 service. For example, if three ODU2s between the source node device A and the sink node device B and four ODU1s between the source node device A and the sink node device C may be protected by one high order ODUk1 of the high order ODUk1 group, the 30 ODU2s between the source node device A and the sink node device B and 40 ODU1s between the source node device A and the sink node device C may be protected by ten high order ODUkls in the high order ODUk1 group, where each high order ODUk1 corresponds to a line board on each node device.

The node device F queries, according to the faulty link information, Table 1 and may learn that a fault occurs on the link from the node device A to the node device B and that the fault will affect 30 ODU2 service between the node device A and the node device B and 40 ODU1 service between the node device A and the node device C. Hence, the node device F obtains, according to the faulty link information, first interrupted service information, that is, 30 interrupted ODU2 service and 40 interrupted ODU1 service are interrupted.

The node device F detects, according to the first interrupted service information, that 30 ODU2 service between the node device A and the node device B and 40 ODU1 service between the node device A and the node device C need to be protected by using protection channels, and configures high order ODUkls of the high order ODUk1 sub-groups in the FA span and an FE span, that is, the node device F configures protection channels in the receive direction and the transmit direction. For example, if a high order ODUk1 sub-group has 10 high order ODU3s, the node device F separately configures each ODU3 of the 10 high order ODU3s in the AF span and the FE span as three ODU2s and four ODU1s, and configures the protection channels to pass through the local node device. In this embodiment, each high order ODUk1 may also not be fully configured and specifically, be configured according to the first interrupted service information. For example, if the first interrupted service information indicates that merely 30 ODU2 service are interrupted, each ODU3 of the 10 high order ODU3s may be configured as three ODU2s separately and the remaining may also not be configured, which is not specifically limited herein.

The node devices E, D and C are configured separately according to the aftermentioned method for configuring the node device F.

Therefore, the 30 ODU2 service between the node device A and the node device B may be switched and transmitted in a group manner through the protection channel A-F-E-D-C-B. The node device B, when detecting that the local node is the sink node device of the 30 ODU2 service, implements group bridging and switching for the 30 ODU2 service by using ODU2 cross-connection, thereby enabling normal transmission of the 30 ODU2 service after a fiber cut occurs between the node device A and the node device B. The 40 ODU1 service between the node device A and the node device C may be transmitted through the protection channel A-F-E-D-C. The node device C detects that the local node is the sink node device of the 40 ODU1 service, and implements group bridging and switching for the 40 ODU1 service by using ODU1 cross-connection, thereby enabling normal transmission of the 40 ODU1 service after a fiber cut occurs between the node device A and the node device C.

S207: The first node device obtains second information and sends the second information to a downstream node device.

In this step, when the fault information is not a switching condition of the high order ODUk1 group, that is, the fault information is an individual switching condition of the high order ODUk1, where an individual SF switching condition of the high order ODUk1 is configurable, including an offline event of a board processing a single wavelength, a fault on a board component processing a single wavelength, OCh_LOS-P (Optical Channel_Loss Of Signal-Payload, Optical Channel_Loss Of Signal-Payload), or an SF condition existing on working channels/protection channels of less than M high order ODUkls by default. An individual SD switching condition of the high order ODUk1 is configurable, including an SD condition existing on working channels/protection channels of less than M high order ODUkls by default. In addition, an OCh drawback, an OTUk drawback, and a high order ODUk drawback may be configured as an individual SF/SD switching condition of a high order ODUk1.

When the fault information is about an offline event of a board or a fault on a board component, a node device itself on which the fault occurs may detect the fault and hence the first node device is the node device on which the fault occurs; when the fault information is neither about an offline event of a board nor about a fault on a board component, in this embodiment, a node device directly adjacent to the node device on which the fault occurs detects the fault.

When a fault occurs on a board component of a line board on a node device on an ODUk shared protection ring, the first node device, that is, the node device on which the fault occurs, obtains faulty line board information according to the fault information. The faulty line board information is used to specify on which line board of which node device that the fault occurs. The first node device constructs second information by using the faulty line board information and a second information identifier, where the second information identifier is used to uniquely identify an attribute of the second information and the second information identifier is information about individual switching.

In this embodiment, the first node device configures high order ODUk1s of the protection channel accordingly on itself according to the second information.

S208: A second node device receives the second information sent by an upstream node device, obtains a second switching condition corresponding to the second information according to the second information, and determines whether a switching condition with a processing priority higher than the processing priority of the second switching condition exists on the local node. If not, the second node device forwards the second information to a downstream node device of the local node. If yes, the second node device uses the local node as a first node device and returns to S202.

In this embodiment, it is assumed that a fault occurs on a board component of a line board on the node device F. Then, the node device F is a first node device, the node device E is a third node device, and the node devices A, B, C and D are second node devices.

After the node device F sends the second information to the node device A, the node device A receives the second information sent by the node device F, and obtains a second switching condition corresponding to the second information according to the second information; specifically, the node device A obtains a second information identifier according to the second information, where the second information identifier is information about individual switching, indicating that the second switching condition corresponding to the second information is an individual switching condition. After obtaining the second information identifier, the node device A may also obtain a condition type according to the second information, where the condition type includes an SF condition for individual switching or an SD condition for individual switching, indicating that the second switching condition corresponding to the second information is an individual SF condition or an individual SD condition.

In this embodiment, preferably, the processing priority of a group switching condition is higher than the processing priority of an individual switching condition, the processing priority of a group SF condition is higher than the processing priority of a group SD condition, and the processing priority of an individual SF condition is higher than the processing priority of an individual SD condition. After obtaining the second switching condition corresponding to the second information, the node device A determines whether a switching condition with a processing priority higher than the processing priority of the second switching condition exists on the local node. If not, the node device A forwards the second information to the downstream node device B of the local node. If yes, the node device A uses the local node device A as a first node device and returns to S202 to perform a corresponding subsequent process, where the second information is information corresponding to the switching condition (for example, a local switching condition K) with a processing priority higher than the processing priority of the second switching condition but is not information corresponding to the second switching condition.

The node devices B, C and D have a similar processing process to that of the node device A and the details are not described herein. For details, reference may be made to aforementioned descriptions. S209: The third node device receives the second information sent by an upstream node device, obtains a second switching condition corresponding to the second information according to the second information, and determines whether a switching condition with a processing priority higher than the processing priority of the second switching condition exists on the local node. If not, the third node device generates second switching acknowledgement information, sends the second switching acknowledgement information to the upstream node device of the local node, and implements individual switching of interrupted service. If yes, the third node device uses the local node as a first node device and returns to S202.

The second switching acknowledgement information in this embodiment is used to notify a second node device that the second switching condition is a switching condition that has the highest processing priority on the second node device and the third node device, and that the second node device may perform switching for the second information.

The node device E (that is, the third node device) receives the second information sent by the node device D, obtains a second switching condition corresponding to the second information according to the second information, and determines whether a switching condition with a processing priority higher than the processing priority of the second switching condition exists on the local node. If not, the node device E generates second switching acknowledgement information, sends the second switching acknowledgement information to the upstream node device of the local node, that is, the node device D. If yes, the node device E uses the node device E as a first node device; after the local node, being a first node device, obtains second information, the second information is transmitted to the node devices D, C, B, A, and F in the specified sequence, where the node devices A, D, C and B are second node devices and the node device F is a third node device. For its processing process, reference may be made to aforementioned descriptions.

When a switching condition with a processing priority higher than the processing priority of the second switching condition does not exist on the node device E, the node device E obtains second interrupted service information according to the second information, and configures a high order ODUk1 corresponding to a faulty line board according to the second interrupted service information to implement individual switching of interrupted service.

For example, the node device E obtains, from the second information, the faulty line board information, indicating that a fault occurs on a fifth line board of the node device F. Because a line board has one-to-one correspondence with a high order ODUk1, the node device E may learn that a service fault occurs on a high order ODUk1 corresponding to the fifth line board of the node device F. By querying a node service condition table of the local node device, the node device E may obtain second interrupted service information, indicating that service protected by the high order ODUk1 corresponding to the fifth line board of the node device F are interrupted. The node service condition table includes a service protection individual.

If the node device E detects, according to the second interrupted service information, that eight ODU1 service protected by the high order ODUk1 corresponding to the fifth line board of the node device F need to be protected by using protection channels, the node device E configures a high order ODUk1, in the EF span and the ED span, corresponding to the fifth line board of the node device F. For example, the node device E configures a fifth high order ODUk1 (but is not limited to this), in the EF span and the ED span, corresponding to the fifth line board of the node device F. On a different node device, a high order ODUk1 corresponding to the fifth line board of the node device F may also be a high order ODUk1 corresponding to a board in another slot and is not necessarily the fifth high order ODUk1 corresponding to a board in the fifth slot. If there are ten high order ODU3s in a high order ODUk1 sub-group, a fifth high order ODU3 is configured as eight ODU1s and 16 ODU0s and protection channels are configured to pass through the local node device.

S210: When a second node device receives the second switching acknowledgement information sent by a downstream node device, the second node device implements individual switching of interrupted service according to the second information.

In this step, when the second node device receives the second switching acknowledgement information sent by the downstream node device, the second node device confirms that the processing priority of the second switching condition corresponding to the second information is the highest on the second node device and the third node device and that processing corresponding to the second information may be triggered. Specifically, the second node device obtains second interrupted service information according to the second information, and configures a high order ODUk1 corresponding to a faulty line board to implement individual switching of interrupted service.

The node devices D, C, B and A have a similar processing process. The following uses the node device D as an example to describe details about the processing process.

For example, when the node device D receives second switching acknowledgement information sent by the downstream node device, the node device D obtains, from the second information, the faulty line board information, indicating that a fault occurs on a fifth line board of the node device F, and hence may learn that a service fault occurs on a high order ODUk1 corresponding to the fifth line board of the node device F. By querying a node service condition table of the local node device, the node device D may obtain second interrupted service information, indicating that service protected by the high order ODUk1 corresponding to the fifth line board of the node device F are interrupted. The node service condition table includes a service protection individual.

If the node device D detects, according to the second interrupted service information, that eight ODU1 service protected by the high order ODUk1 corresponding to the fifth line board of the node device F need to be protected by using protection channels, the node device D configures a high order ODUk1, in the DE span and the DC span, corresponding to the fifth line board of the node device F. For example, the node device D configures a fifth high order ODUk1, in the DE span and the DC span, corresponding to the fifth line board of the node device F. If there are ten high order ODU3s in a high order ODUk1 sub-group, a fifth high order ODU3 is configured as eight ODU1s and 16 ODU0s and protection channels are configured to pass through the local node device.

In this embodiment, a first node device obtains fault information. When the fault information is a switching condition of a preset high order ODUk1 group, the first node device sends the first information to other node devices other than the first node device on the ODUk shared protection ring, to the other node devices to implement group switching of interrupted service according to the first information so as to process interrupted service as a group at the same time, thereby accelerating the speed of service switching.

Furthermore, when the fault information is not a switching condition of a preset high order ODUk1 group, the first node device sends the second information to the other node devices, so that the other node devices implement individual switching of interrupted service according to the second information so as to switch only affected individual service without affecting normal service, thereby avoiding incorrect switching.

### Embodiment 3

Referring to FIG. 5, FIG. 5 is a first structural schematic diagram of a node device embodiment according to Embodiment 3 of the present invention, where the node device, among all node devices that constitute an Optical Channel Data Unit k ODUk shared protection ring, is a node device that detects fault occurrence. The node device includes:
an obtaining module 501, configured to obtain fault information;
a determining and processing module 502, configured to determine whether the fault information is a switching condition of a preset high order ODUk1 group; if yes, obtain first information according to the fault information and send the first information to other node devices on the ODUk shared protection ring to the other node devices to implement group switching of interrupted service according to the first information; if not, obtain second information according to the fault information and send the second information to the other node devices so that the other node devices implement individual switching of interrupted service according to the second information.

In an implementation manner, the determining and processing module 502 includes a first obtaining unit 5021 and a first generating unit 5022, as shown in FIG. 6. FIG. 6 is a second structural schematic diagram of a node device embodiment according to Embodiment 3 of the present invention.

The first obtaining unit 5021 is configured to obtain faulty link information according to the fault information.

The first generating unit 5022 is configured to construct first information by using the faulty link information and a first information identifier, where the first information identifier is information about group switching.

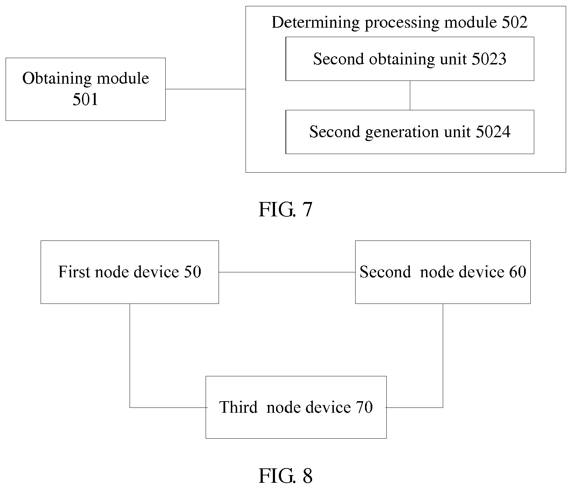

In another implementation manner, the determining and processing module 502 includes a second obtaining unit 5023 and a second generating unit 5024, as shown in FIG. 7. FIG. 7 is a third structural schematic diagram of a node device embodiment according to Embodiment 3 of the present invention.

The second obtaining unit 5023 is configured to obtain faulty line board information according to the fault information.

The second generating unit 5024 is configured to construct second information by using the faulty line board information and a second information identifier, where the second information identifier is information about individual switching.

In this embodiment, a node device obtains fault information. When the fault information is a switching condition of a preset high order ODUk1 group, the node device sends first information to other node devices on the ODUk shared protection ring, to the other node devices to implement group switching of interrupted service according to the first information so as to process interrupted service as a group at the same time, thereby accelerating the speed of service switching.

Furthermore, when the fault information is not a switching condition of a preset high order ODUk1 group, the first node device sends the second information to the other node devices, so that the other node devices implement individual switching of interrupted service according to the second information so as to switch only affected individual service without affecting normal service, thereby avoiding incorrect switching.

### Embodiment 4

Referring to FIG. 8, FIG. 8 is a structural schematic diagram of a system embodiment for shared protection in an optical transport network according to Embodiment 4 of the present invention, where the system for shared protection in an optical transport network includes:
a first node device 50, a second node device 60 and a third node device 70, where the first node device 50, the second node device 60 and the third node device are located on an Optical Channel Data Unit k ODUk shared protection ring, and:
the first node device 50 is configured to obtain fault information and determine whether the fault information is a switching condition of a preset high order ODUk1 group; if yes, the first node device 50 obtains first information according to the fault information and send the first information to the second node device 60 and the third node device 70 respectively, so that the second node device 60 and the third node device 70 implement group switching of interrupted service according to the first information, where, the second node device 60 is a node device other than the first node device 50 and the third node device 70 on the ODUk shared protection ring, and the third node device 70 is an upstream node device of the first node device 50; if not, the first node device 50 obtains second information according to the fault information and send the second information to the second node device 60 and the third node device 70 respectively, so that the second node device 60 and the third node device 70 implement individual switching of interrupted service according to the second information.

In an implementation manner, the first node device 50 is specifically configured to obtain faulty link information according to the fault information and construct first information by using the faulty link information and a first information identifier, where the first information identifier is information about group switching.

Or, the first node device 50 is specifically configured to obtain faulty line board information according to the fault information and construct second information by using the faulty line board information and a second information identifier, where the second information identifier is information about individual switching.

In another implementation manner, the first node device 50 is specifically configured to send the first information to a downstream node device.

Accordingly, the second node device 60 is configured to receive the first information sent by an upstream node device, obtain a first switching condition corresponding to the first information according to the first information, and determine whether a switching condition with a processing priority higher than the processing priority of the first switching condition exists on the local node; if not, forward the first information to a downstream node device of the local node; if yes, use the local node as a first node device 50 and perform the step for obtaining fault information.

The third node device 70 is configured to receive first information sent by an upstream node device. In another implementation manner, the third node device 70 is further configured to obtain a first switching condition corresponding to the first information according to the first information, and determine whether a switching condition with a processing priority higher than the processing priority of the first switching condition exists on the local node; if not, generate first switching acknowledgement information, send the first switching acknowledgement information to an upstream node device of the local node, and implement group switching of interrupted service according to the first information; if yes, use the local node as a first node device and perform the step for obtaining fault information.

Accordingly, the second node device 60 is further configured to: when receiving the first switching acknowledgement information sent by a downstream node device, implement group switching of interrupted service according to the first information.

In another implementation manner, the third node device 70 is further configured to obtain first interrupted service information according to the first information, and configure high order ODUk1s in the high order ODUk1 group according to the first interrupted service information, to implement group switching of interrupted service.

Accordingly, the second node device 60 is further configured to obtain first interrupted service information according to the first information, and configure high order ODUk1s in the high order ODUk1 group according to the first interrupted service information, to implement group switching of interrupted service.

In another implementation manner, the first node device 50 is specifically configured to send the second information to a downstream node device.

Accordingly, the second node device 60 is configured to receive the second information sent by an upstream node device, obtain a second switching condition corresponding to the second information according to the second information, and determine whether a switching condition with a processing priority higher than the processing priority of the second switching condition exists on the local node; if not, forward the second information to a downstream node device of the local node; if yes, use the local node as a first node device and perform the step for obtaining fault information; where, the second node device is a node device other than the first node device 50 and the third node device 70 on the ODUk shared protection ring, and the third node device 70 is an upstream node device of the first node device.

The third node device 70 is configured to receive second information sent by an upstream node device.

In another implementation manner, the third node device 70 is further configured to obtain a second switching condition corresponding to the second information according to the second information, and determine whether a switching condition with a processing priority higher than the processing priority of the second switching condition exists on the local node; if not, generate second switching acknowledgement information, send the second switching acknowledgement information to an upstream node device of the local node, and implement individual switching of interrupted service according to the second information; if yes, use the local node as a first node device and perform the step for obtaining fault information.

Accordingly, the second node device 60 is further configured to: when receiving the second switching acknowledgement information sent by a downstream node device, implement individual switching of interrupted service according to the second information.

In another implementation manner, the third node device 70 is further configured to obtain second interrupted service information according to the second information, and configure a high order ODUk1 corresponding to a faulty line board according to the second interrupted service information, to implement individual switching of interrupted service.

Accordingly, the second node device 60 is further configured to obtain second interrupted service information according to the second information, and configure a high order ODUk1 corresponding to a faulty line board according to the second interrupted service information, to implement individual switching of interrupted service.

In this embodiment, the first node device obtains fault information. When the fault information is a switching condition of a preset high order ODUk1 group, the first node device sends the first information to the other node devices other than the first node device on the ODUk shared protection ring, to the other node devices to implement group switching of interrupted service according to the first information so as to process interrupted service as a group at the same time, thereby accelerating the speed of service switching.

Furthermore, when the fault information is not a switching condition of a preset high order ODUk1 group, the first node device sends the second information to the other node devices, so that the other node devices implement individual switching of interrupted service according to the second information so as to switch only affected individual service without affecting normal service, thereby avoiding incorrect switching.

It should be noted that, the embodiments in this specification are described in a progressive manner, with each embodiment focusing on differences thereof from other embodiments, and for the same or similar parts, reference may be made among the embodiments. The apparatus embodiment is basically the same as the method embodiment, and is therefore described briefly. For the relevant parts in the apparatus embodiment, reference may be made to the corresponding description in the method embodiment.

It should be noted that the relational terms herein such as first and second are used only to differentiate an entity or operation from another entity or operation, and do not require or imply any actual relationship or sequence between these entities or operations. Moreover, the terms "include", "comprise", and any variation thereof are intended to cover a non-exclusive inclusion. Therefore, a process, method, article, or device that includes a series of elements not only includes such elements, but also includes other elements not specified expressly, or may include inherent elements of the process, method, article, or device. If no more limitations are made, an element limited by "include a/an..." does not exclude other identical elements existing in the process, method, article, or device that includes the element.

A person of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

## Claims

1. A method for shared protection in an optical transport network, comprising:
obtaining (S101), by a first node device, among all node devices that constitute an Optical Channel Data Unit k ODUk shared protection ring, fault information, wherein the first node device is a node device that detects fault occurrence;
**characterized by**
determining (S102), by the first node device, whether the fault information is a switching condition of a preset high order ODUk1 group; if yes, obtaining first information according to the fault information, and sending the first information to other node devices on the ODUk shared protection ring, to cause the other node devices to implement group switching of interrupted service according to the first information; and
if not, obtaining, by the first node device, second information according to the fault information, and sending the second information to the other node devices, so that the other node devices implement individual switching of interrupted service according to the second information;
wherein
the preset high order ODUk1 group comprises N high order ODUk1 sub-groups, wherein all high order ODUk1 s of a high order ODUk1 sub-group between any two adjacent node devices on the ODUk shared protection ring use a same optical fiber for transmission and share a same path between a source node device and a sink node device; each of the high order ODUk1 sub-groups has the same number of high order ODUk1s, N is the number of node devices on the ODUk shared protection ring.

2. The method according to claim 1, wherein the obtaining, by the first node device, first information according to the fault information comprises:
obtaining, by the first node device, faulty link information according to the fault information; and
constructing, by the first node device, first information by using the faulty link information and a first information identifier, wherein the first information identifier is information about group switching.

3. The method according to claim 1, wherein the obtaining, by the first node device, second information according to the fault information comprises:
obtaining, by the first node device, faulty line board information according to the fault information; and
constructing, by the first node device, second information by using the faulty line board information and a second information identifier, wherein the second information identifier is information about individual switching.

4. The method according to any one of claims 1 to 3, wherein the sending the first information to other node devices on the ODUk shared protection ring comprises:
sending, by the first node device, the first information to a downstream node device so that a second node device receives the first information sent by an upstream node device, obtaining a first switching condition corresponding to the first information according to the first information, and determining whether a switching condition with a processing priority higher than the processing priority of the first switching condition exists on the local node; if not, forwarding the first information to a downstream node device of the local node; if yes, using the local node as a first node device and performing the step for obtaining fault information; in addition, receiving, by the third node device, the first information sent by an upstream node device; wherein, the second node device is a node device other than the first node device and the third node device on the ODUk shared protection ring, and the third node device is an upstream node device of the first node device.

5. The method according to claim 4, after the receiving, by the third node device, the first information sent by an upstream node device, further comprising:
obtaining, by the third node device, a first switching condition corresponding to the first information according to the first information, and determining whether a switching condition with a processing priority higher than the processing priority of the first switching condition exists on the local node; if not, generating first switching acknowledgement information, sending the first switching acknowledgement information to an upstream node device of the local node, and implementing group switching of interrupted service according to the first information; if yes, using the local node as a first node device and performing the step for obtaining fault information; and
implementing, by the second node device, group switching of interrupted service according to the first information when the second node device receives the first switching acknowledgement information sent by a downstream node device.

6. The method according to any one of claims 1 to 3, wherein the sending the second information to the other node devices comprises:
sending, by the first node device, the second information to a downstream node device so that a second node device receives the second information sent by an upstream node device, obtaining a second switching condition corresponding to the second information according to the second information, and determining whether a switching condition with a processing priority higher than the processing priority of the second switching condition exists on the local node; if not, forwarding the second information to a downstream node device of the local node; if yes, using the local node as a first node device and performing the step for obtaining fault information; in addition, receiving, by the third node device, the second information sent by an upstream node device; wherein, the second node device is a node device other than the first node device and the third node device on the ODUk shared protection ring, and the third node device is an upstream node device of the first node device.

7. The method according to claim 6, after the receiving, by the third node device, the second information sent by an upstream node device, further comprising:
obtaining, by the third node device, a second switching condition corresponding to the second information according to the second information, and determining whether a switching condition with a processing priority higher than the processing priority of the second switching condition exists on the local node; if not, generating second switching acknowledgement information, sending the second switching acknowledgement information to an upstream node device of the local node, and implementing individual switching of interrupted service according to the second information; if yes, using the local node as a first node device and performing the step for obtaining fault information;
implementing, by the second node device, individual switching of interrupted service according to the second information when the second node device receives the second switching acknowledgement information sent by a downstream node device.

8. A node device, wherein the node device, among all node devices that constitute an Optical Channel Data Unit k ODUk shared protection ring, is a node device that detects fault occurrence, wherein the node device comprises:
an obtaining module (501), configured to obtain fault information;
**characterized by**
a determining and processing module (502), configured to determine whether the fault information is a switching condition of a preset high order ODUk1 group; if yes, obtain first information according to the fault information and send the first information to other node devices on the ODUk shared protection ring to the other node devices to implement group switching of interrupted service according to the first information; if not, obtain second information according to the fault information and send the second information to the other node devices so that the other node devices implement individual switching of interrupted service according to the second information;
wherein
the preset high order ODUk1 group comprises N high order ODUk1 sub-groups, wherein all high order ODUkls of a high order ODUk1 sub-group between any two adjacent node devices on the ODUk shared protection ring use a same optical fiber for transmission and share a same path between the node device and a sink node device; each of the high order ODUk1 sub-groups has the same number of high order ODUk1s, N is the number of node devices on the ODUk shared protection ring.

9. The node device according to claim 8, wherein the determining and processing module (502) comprises:
a first obtaining unit (5021), configured to obtain faulty link information according to the fault information; and
a first generating unit (5022), configured to construct first information by using the faulty link information and a first information identifier, wherein the first information identifier is information about group switching.

10. The node device according to claim 8, wherein the determining and processing module (502) comprises:
a second obtaining unit (5023), configured to obtain faulty line board information according to the fault information; and
a second generating unit (5024), configured to construct second information by using the faulty line board information and a second information identifier, where the second information identifier is information about individual switching.

11. A system for shared protection in an optical transport network, comprising a first node device (50), a second node device (60), and a third node device (70), wherein the first node device (50), the second node device (60), and the third node device (70) are located on an Optical Channel Data Unit k ODUk shared protection ring and:
the first node device (50) is configured to obtain fault information;
the system is **characterized in that**
the first node device (50) is configured to determine whether the fault information is a switching condition of a preset high order ODUk1 group; if yes, the first node device (50) obtains first information according to the fault information and sends the first information to the second node device (60) and the third node device (70) respectively, so that the second node device (60) and the third node device (70) implement group switching of interrupted service according to the first information, wherein, the second node device (60) is a node device other than the first node device (50) and the third node device (70) on the ODUk shared protection ring, and the third node device (70) is an upstream node device of the first node device (50); if not, the first node device (50) obtains second information according to the fault information and sends the second information to the second node device (60) and the third node device (70) respectively, so that the second node device (60) and the third node device (70) implement individual switching of interrupted service according to the second information;
wherein
the preset high order ODUk1 group comprises N high order ODUk1 sub-groups, wherein all high order ODUkls of a high order ODUk1 sub-group between any two adjacent node devices on the ODUk shared protection ring use a same optical fiber for transmission and share a same path between the first node device (50) and the second node device (60); each of the high order ODUk1 sub-groups has the same number of high order ODUk1s, N is the number of node devices on the ODUk shared protection ring.

12. The system according to claim 11, wherein: the first node device (50) is specifically configured to send the first information to a downstream node device;
accordingly, the second node device (60) is configured to receive the first information sent by an upstream node device, obtain a first switching condition corresponding to the first information according to the first information, and determine whether a switching condition with a processing priority higher than the processing priority of the first switching condition exists on the local node; if not, forward the first information to a downstream node device of the local node; if yes, use the local node as a first node device (50) and perform the step for obtaining fault information; and
the third node device (70) is configured to receive first information sent by an upstream node device.

13. The system according to claim 12, wherein the third node device (70) is further configured to obtain a first switching condition corresponding to the first information according to the first information, and determine whether a switching condition with a processing priority higher than the processing priority of the first switching condition exists on the local node; if not, generate first switching acknowledgement information, send the first switching acknowledgement information to an upstream node device of the local node, and implement group switching of interrupted service according to the first information; if yes, use the local node as a first node device (50) and perform the step for obtaining fault information; and
accordingly, the second node device (60) is further configured to: when receiving the first switching acknowledgement information sent by a downstream node device, implement group switching of interrupted service according to the first information.

14. The system according to claim 13, wherein the first node device (50) is specifically configured to send the second information to a downstream node device;
accordingly, the second node device (60) is configured to receive the second information sent by an upstream node device, obtain a second switching condition corresponding to the second information according to the second information, and determine whether a switching condition with a processing priority higher than the processing priority of the second switching condition exists on the local node; if not, forward the second information to a downstream node device of the local node; if yes, use the local node as a first node device (50) and perform the step for obtaining fault information; wherein, the second node device (60) is a node device other than the first node device (50) and the third node device on the ODUk shared protection ring, and the third node device (70) is an upstream node device of the first node device (50); and
the third node device (70) is configured to receive second information sent by an upstream node device.

## Patentansprüche

1. Verfahren für gemeinsamen Schutz in einem optischen Transportnetz, umfassend:
Gewinnen (S101), durch eine erste Knotenvorrichtung aus allen Knotenvorrichtungen, welche einen gemeinsam genutzten Schutzring für optische Kanaldateneinheiten-k (Optical Channel Data Unit k, ODUk) bilden, von Fehlerinformationen, wobei die erste Knotenvorrichtung eine Knotenvorrichtung ist, welche das Auftreten von Fehlern erkennt;
**gekennzeichnet durch**
Bestimmen (S102), durch die erste Knotenvorrichtung, ob die Fehlerinformationen ein Schaltzustand einer voreingestellten ODUk1-Gruppe hoher Ordnung sind; falls ja, Gewinnen von ersten Informationen gemäß den Fehlerinformationen und Senden der ersten Informationen an andere Knotenvorrichtungen auf dem gemeinsam genutzten ODUk-Schutzring, um die anderen Knotenvorrichtungen zu veranlassen, Gruppenschaltung von unterbrochenem Dienst gemäß den ersten Informationen zu implementieren; und
falls nicht, Gewinnen, durch die erste Knotenvorrichtung, von zweiten Informationen gemäß den Fehlerinformationen und Senden der zweiten Informationen an die anderen Knotenvorrichtungen, so dass die anderen Knotenvorrichtungen individuelle Schaltung von unterbrochenem Dienst gemäß den zweiten Informationen implementieren;
wobei
die voreingestellte ODUk1-Gruppe hoher Ordnung N ODUk1-Untergruppen hoher Ordnung umfasst, wobei alle ODUkls hoher Ordnung einer ODUk1-Untergruppe hoher Ordnung zwischen beliebigen zwei benachbarten Knotenvorrichtungen auf dem gemeinsam genutzten ODUk-Schutzring denselben Lichtwellenleiter zur Übertragung verwenden und denselben Weg zwischen einer Quellknotenvorrichtung und einer Senkenknotenvorrichtung gemeinsam nutzen; jede der ODUkl-Untergruppen hoher Ordnung dieselbe Anzahl von ODUkls hoher Ordnung aufweist, N die Anzahl der Knotenvorrichtungen auf dem gemeinsam genutzten ODUk-Schutzring ist.

2. Verfahren nach Anspruch 1, wobei das Gewinnen, durch die erste Knotenvorrichtung, von ersten Informationen gemäß den Fehlerinformationen umfasst:
Gewinnen, durch die erste Knotenvorrichtung, von Informationen über eine fehlerhafte Verbindung gemäß den Fehlerinformationen; und
Erstellen, durch die erste Knotenvorrichtung, von ersten Informationen unter Verwendung der Informationen über eine fehlerhafte Verbindung und einer ersten Informationskennung, wobei die erste Informationskennung Information über Gruppenschaltung ist.

3. Verfahren nach Anspruch 1, wobei das Gewinnen, durch die erste Knotenvorrichtung, von zweiten Informationen gemäß den Fehlerinformationen umfasst:
Gewinnen, durch die erste Knotenvorrichtung, von Informationen über eine fehlerhafte Leitungsplatte gemäß den Fehlerinformationen; und
Erstellen, durch die erste Knotenvorrichtung, von zweiten Informationen unter Verwendung der Informationen über eine fehlerhafte Leitungsplatte und einer zweiten Informationskennung, wobei die zweite Informationskennung eine Information über individuelle Schaltung ist.

4. Verfahren nach einem der Ansprüche 1 bis 3, wobei das Senden der ersten Informationen an die anderen Knotenvorrichtungen auf dem gemeinsam genutzten ODUk-Schutzring umfasst:
Senden, durch die erste Knotenvorrichtung, der ersten Informationen an eine stromabwärtige Knotenvorrichtung, so dass eine zweite Knotenvorrichtung die ersten Informationen empfängt, die von einer stromaufwärtigen Knotenvorrichtung gesendet wurden, Gewinnen eines den ersten Informationen entsprechenden ersten Schaltzustands gemäß den ersten Informationen und Bestimmen, ob ein Schaltzustand mit einer Verarbeitungspriorität, die höher als die Verarbeitungspriorität des ersten Schaltzustands ist, auf dem lokalen Knoten existiert; falls nicht, Weiterleiten der ersten Informationen an eine stromabwärtige Knotenvorrichtung des lokalen Knotens; falls ja, Verwenden des lokalen Knotens als eine erste Knotenvorrichtung und Durchführen des Schrittes zum Gewinnen von Fehlerinformationen; außerdem Empfangen, durch die dritte Knotenvorrichtung, der ersten Informationen, die von einer stromaufwärtigen Knotenvorrichtung gesendet wurden; wobei die zweite Knotenvorrichtung eine andere Knotenvorrichtung als die erste Knotenvorrichtung und die dritte Knotenvorrichtung auf dem gemeinsam genutzten ODUk-Schutzring ist und die dritte Knotenvorrichtung eine stromaufwärtige Knotenvorrichtung der ersten Knotenvorrichtung ist.

5. Verfahren nach Anspruch 4, welches nach dem Empfangen, durch die dritte Knotenvorrichtung, der ersten Informationen, die von einer stromaufwärtigen Knotenvorrichtung gesendet wurden, ferner umfasst:
Gewinnen, durch die dritte Knotenvorrichtung, eines den ersten Informationen entsprechenden ersten Schaltzustands gemäß den ersten Informationen und Bestimmen, ob ein Schaltzustand mit einer Verarbeitungspriorität, die höher als die Verarbeitungspriorität des ersten Schaltzustands ist, auf dem lokalen Knoten existiert; falls nicht, Erzeugen erster Schaltungsquittierungsinformationen, Senden der ersten Schaltungsquittierungsinformationen an eine stromaufwärtige Knotenvorrichtung des lokalen Knotens und Implementieren von Gruppenschaltung von unterbrochenem Dienst gemäß den ersten Informationen; falls ja, Verwenden des lokalen Knotens als eine erste Knotenvorrichtung und Durchführen des Schrittes zum Gewinnen von Fehlerinformationen; und
Implementieren, durch die zweite Knotenvorrichtung, von Gruppenschaltung von unterbrochenem Dienst gemäß den ersten Informationen, wenn die zweite Knotenvorrichtung die ersten Schaltungsquittierungsinformationen empfängt, die von einer stromabwärtigen Knotenvorrichtung gesendet wurden.

6. Verfahren nach einem der Ansprüche 1 bis 3, wobei das Senden der zweiten Informationen an die anderen Knotenvorrichtungen umfasst:
Senden, durch die erste Knotenvorrichtung, der zweiten Informationen an eine stromabwärtige Knotenvorrichtung, so dass eine zweite Knotenvorrichtung die zweiten Informationen empfängt, die von einer stromaufwärtigen Knotenvorrichtung gesendet wurden, Gewinnen eines den zweiten Informationen entsprechenden zweiten Schaltzustands gemäß den zweiten Informationen und Bestimmen, ob ein Schaltzustand mit einer Verarbeitungspriorität, die höher als die Verarbeitungspriorität des zweiten Schaltzustands ist, auf dem lokalen Knoten existiert; falls nicht, Weiterleiten der zweiten Informationen an eine stromabwärtige Knotenvorrichtung des lokalen Knotens; falls ja, Verwenden des lokalen Knotens als eine erste Knotenvorrichtung und Durchführen des Schrittes zum Gewinnen von Fehlerinformationen; außerdem Empfangen, durch die dritte Knotenvorrichtung, der zweiten Informationen, die von einer stromaufwärtigen Knotenvorrichtung gesendet wurden; wobei die zweite Knotenvorrichtung eine andere Knotenvorrichtung als die erste Knotenvorrichtung und die dritte Knotenvorrichtung auf dem gemeinsam genutzten ODUk-Schutzring ist und die dritte Knotenvorrichtung eine stromaufwärtige Knotenvorrichtung der ersten Knotenvorrichtung ist.

7. Verfahren nach Anspruch 6, welches nach dem Empfangen, durch die dritte Knotenvorrichtung, der zweiten Informationen, die von einer stromaufwärtigen Knotenvorrichtung gesendet wurden, ferner umfasst:
Gewinnen, durch die dritte Knotenvorrichtung, eines den zweiten Informationen entsprechenden zweiten Schaltzustands gemäß den zweiten Informationen und Bestimmen, ob ein Schaltzustand mit einer Verarbeitungspriorität, die höher als die Verarbeitungspriorität des zweiten Schaltzustands ist, auf dem lokalen Knoten existiert; falls nicht, Erzeugen zweiter Schaltungsquittierungsinformationen, Senden der zweiten Schaltungsquittierungsinformationen an eine stromaufwärtige Knotenvorrichtung des lokalen Knotens und Implementieren von individueller Schaltung von unterbrochenem Dienst gemäß den zweiten Informationen; falls ja, Verwenden des lokalen Knotens als eine erste Knotenvorrichtung und Durchführen des Schrittes zum Gewinnen von Fehlerinformationen;
Implementieren, durch die zweite Knotenvorrichtung, von individueller Schaltung von unterbrochenem Dienst gemäß den zweiten Informationen, wenn die zweite Knotenvorrichtung die zweiten Schaltungsquittierungsinformationen empfängt, die von einer stromabwärtigen Knotenvorrichtung gesendet wurden.

8. Knotenvorrichtung, wobei die Knotenvorrichtung aus allen Knotenvorrichtungen, welche einen gemeinsam genutzten Schutzring für optische Kanaldateneinheiten-k (Optical Channel Data Unit k, ODUk) bilden, eine Knotenvorrichtung ist, welche das Auftreten von Fehlern erkennt, wobei die Knotenvorrichtung umfasst:
ein Gewinnungsmodul (501), das dafür ausgelegt ist, Fehlerinformationen zu gewinnen;
**gekennzeichnet durch**
ein Bestimmungs- und Verarbeitungsmodul (502), das dafür ausgelegt ist zu bestimmen, ob die Fehlerinformationen ein Schaltzustand einer voreingestellten ODUk1-Gruppe hoher Ordnung sind; falls ja, erste Informationen gemäß den Fehlerinformationen zu gewinnen und die ersten Informationen an andere Knotenvorrichtungen auf dem gemeinsam genutzten ODUk-Schutzring zu senden, um Gruppenschaltung von unterbrochenem Dienst gemäß den ersten Informationen zu implementieren; falls nicht, zweite Informationen gemäß den Fehlerinformationen zu gewinnen und die zweiten Informationen an die anderen Knotenvorrichtungen zu senden, so dass die anderen Knotenvorrichtungen individuelle Schaltung von unterbrochenem Dienst gemäß den zweiten Informationen implementieren;
wobei
die voreingestellte ODUk1-Gruppe hoher Ordnung N ODUk1-Untergruppen hoher Ordnung umfasst, wobei alle ODUk1s hoher Ordnung einer ODUk1-Untergruppe hoher Ordnung zwischen beliebigen zwei benachbarten Knotenvorrichtungen auf dem gemeinsam genutzten ODUk-Schutzring denselben Lichtwellenleiter zur Übertragung verwenden und denselben Weg zwischen der Knotenvorrichtung und einer Senkenknotenvorrichtung gemeinsam nutzen; jede der ODUk1-Untergruppen hoher Ordnung dieselbe Anzahl von ODUk1s hoher Ordnung aufweist, N die Anzahl der Knotenvorrichtungen auf dem gemeinsam genutzten ODUk-Schutzring ist.

9. Knotenvorrichtung nach Anspruch 8, wobei das Bestimmungs- und Verarbeitungsmodul (502) umfasst:
eine erste Gewinnungseinheit (5021), die dafür ausgelegt ist, Informationen über eine fehlerhafte Verbindung gemäß den Fehlerinformationen zu gewinnen; und
eine erste Erzeugungseinheit (5022), die dafür ausgelegt ist, erste Informationen unter Verwendung der Informationen über eine fehlerhafte Verbindung und einer ersten Informationskennung zu erstellen, wobei die erste Informationskennung Information über Gruppenschaltung ist.

10. Knotenvorrichtung nach Anspruch 8, wobei das Bestimmungs- und Verarbeitungsmodul (502) umfasst:
eine zweite Gewinnungseinheit (5023), die dafür ausgelegt ist, Informationen über eine fehlerhafte Leitungsplatte gemäß den Fehlerinformationen zu gewinnen; und
eine zweite Erzeugungseinheit (5024), die dafür ausgelegt ist, zweite Informationen unter Verwendung der Informationen über eine fehlerhafte Leitungsplatte und einer zweiten Informationskennung zu erstellen, wobei die zweite Informationskennung Information über individuelle Schaltung ist.

11. System für gemeinsamen Schutz in einem optischen Transportnetz, welches eine erste Knotenvorrichtung (50), eine zweite Knotenvorrichtung (60) und eine dritte Knotenvorrichtung (70) umfasst, wobei sich die erste Knotenvorrichtung (50), die zweite Knotenvorrichtung (60) und die dritte Knotenvorrichtung (70) auf einem gemeinsam genutzten Schutzring für optische Kanaldateneinheiten-k (Optical Channel Data Unit k, ODUk) befinden und:
die erste Knotenvorrichtung (50) dafür ausgelegt ist, Fehlerinformationen zu gewinnen;
das System **dadurch gekennzeichnet ist, dass**
die erste Knotenvorrichtung (50) dafür ausgelegt ist zu bestimmen, ob die Fehlerinformationen ein Schaltzustand einer voreingestellten ODUk1-Gruppe hoher Ordnung sind; falls ja, die erste Knotenvorrichtung (50) erste Informationen gemäß den Fehlerinformationen gewinnt und die ersten Informationen an die zweite Knotenvorrichtung (60) bzw. die dritte Knotenvorrichtung (70) sendet, so dass die zweite Knotenvorrichtung (60) und die dritte Knotenvorrichtung (70) Gruppenschaltung von unterbrochenem Dienst gemäß den ersten Informationen implementieren, wobei die zweite Knotenvorrichtung (60) eine andere Knotenvorrichtung als die erste Knotenvorrichtung (50) und die dritte Knotenvorrichtung (70) auf dem gemeinsam genutzten ODUk-Schutzring ist und die dritte Knotenvorrichtung (70) eine stromaufwärtige Knotenvorrichtung der ersten Knotenvorrichtung (50) ist; falls nicht, die erste Knotenvorrichtung (50) zweite Informationen gemäß den Fehlerinformationen gewinnt und die zweiten Informationen an die zweite Knotenvorrichtung (60) bzw. die dritte Knotenvorrichtung (70) sendet, so dass die zweite Knotenvorrichtung (60) und die dritte Knotenvorrichtung (70) individuelle Schaltung von unterbrochenem Dienst gemäß den zweiten Informationen implementieren;
wobei
die voreingestellte ODUk1-Gruppe hoher Ordnung N ODUk1-Untergruppen hoher Ordnung umfasst, wobei alle ODUk1s hoher Ordnung einer ODUk1-Untergruppe hoher Ordnung zwischen beliebigen zwei benachbarten Knotenvorrichtungen auf dem gemeinsam genutzten ODUk-Schutzring denselben Lichtwellenleiter zur Übertragung verwenden und denselben Weg zwischen der ersten Knotenvorrichtung (50) und der zweiten Knotenvorrichtung (70) gemeinsam nutzen; jede der ODUkl-Untergruppen hoher Ordnung dieselbe Anzahl von ODUk1s hoher Ordnung aufweist, N die Anzahl der Knotenvorrichtungen auf dem gemeinsam genutzten ODUk-Schutzring ist.

12. System nach Anspruch 11, wobei: die erste Knotenvorrichtung (50) speziell dafür ausgelegt ist, die ersten Informationen an eine stromabwärtige Knotenvorrichtung zu senden;
dementsprechend die zweite Knotenvorrichtung (60) dafür ausgelegt ist, die ersten Informationen zu empfangen, die von einer stromaufwärtigen Knotenvorrichtung gesendet wurden, einen den ersten Informationen entsprechenden ersten Schaltzustand gemäß den ersten Informationen zu gewinnen und zu bestimmen, ob ein Schaltzustand mit einer Verarbeitungspriorität, die höher als die Verarbeitungspriorität des ersten Schaltzustands ist, auf dem lokalen Knoten existiert; falls nicht, die ersten Informationen an eine stromabwärtige Knotenvorrichtung des lokalen Knotens weiterzuleiten; falls ja, den lokalen Knoten als eine erste Knotenvorrichtung (50) zu verwenden und den Schritt zum Gewinnen von Fehlerinformationen durchzuführen; und
die dritte Knotenvorrichtung (70) dafür ausgelegt ist, erste Informationen zu empfangen, die von einer stromaufwärtigen Knotenvorrichtung gesendet wurden.

13. System nach Anspruch 12, wobei die dritte Knotenvorrichtung (70) ferner dafür ausgelegt ist, einen den ersten Informationen entsprechenden ersten Schaltzustand gemäß den ersten Informationen zu gewinnen und zu bestimmen, ob ein Schaltzustand mit einer Verarbeitungspriorität, die höher als die Verarbeitungspriorität des ersten Schaltzustands ist, auf dem lokalen Knoten existiert; falls nicht, erste Schaltungsquittierungsinformationen zu erzeugen, die ersten Schaltungsquittierungsinformationen an eine stromaufwärtige Knotenvorrichtung des lokalen Knotens zu senden und Gruppenschaltung von unterbrochenem Dienst gemäß den ersten Informationen zu implementieren; falls ja, den lokalen Knoten als eine erste Knotenvorrichtung (50) zu verwenden und den Schritt zum Gewinnen von Fehlerinformationen durchzuführen; und dementsprechend die zweite Knotenvorrichtung (60) ferner dafür ausgelegt ist: wenn sie die ersten Schaltungsquittierungsinformationen empfängt, die von einer stromabwärtigen Knotenvorrichtung gesendet wurden, Gruppenschaltung von unterbrochenem Dienst gemäß den ersten Informationen zu implementieren.

14. System nach Anspruch 13, wobei die erste Knotenvorrichtung (50) speziell dafür ausgelegt ist, die zweiten Informationen an eine stromabwärtige Knotenvorrichtung zu senden;
dementsprechend die zweite Knotenvorrichtung (60) dafür ausgelegt ist, die zweiten Informationen zu empfangen, die von einer stromaufwärtigen Knotenvorrichtung gesendet wurden, einen den zweiten Informationen entsprechenden zweiten Schaltzustand gemäß den zweiten Informationen zu gewinnen und zu bestimmen, ob ein Schaltzustand mit einer Verarbeitungspriorität, die höher als die Verarbeitungspriorität des zweiten Schaltzustands ist, auf dem lokalen Knoten existiert; falls nicht, die zweiten Informationen an eine stromabwärtige Knotenvorrichtung des lokalen Knotens weiterzuleiten; falls ja, den lokalen Knoten als eine erste Knotenvorrichtung (50) zu verwenden und den Schritt zum Gewinnen von Fehlerinformationen durchzuführen; wobei die zweite Knotenvorrichtung (60) eine andere Knotenvorrichtung als die erste Knotenvorrichtung (50) und die dritte Knotenvorrichtung auf dem gemeinsam genutzten ODUk-Schutzring ist und die dritte Knotenvorrichtung (70) eine stromaufwärtige Knotenvorrichtung der ersten Knotenvorrichtung (50) ist; und
die dritte Knotenvorrichtung (70) dafür ausgelegt ist, zweite Informationen zu empfangen, die von einer stromaufwärtigen Knotenvorrichtung gesendet wurden.

## Revendications

1. Procédé de protection partagée dans un réseau de transport optique, comprenant :
l'obtention (S101), par un premier dispositif nodal, parmi tous les dispositifs nodaux qui constituent un anneau de protection partagé d'unité de données de canal optique k, ODUk, d'informations de défaillance, dans lequel le premier dispositif nodal est un dispositif nodal qui détecte l'occurrence d'une défaillance ;
**caractérisé par**
la détermination (S102), par le premier dispositif nodal, que les informations de défaillance sont ou non une condition de commutation d'un groupe ODUk1 d'ordre élevé prédéfini ; dans l'affirmative, l'obtention de premières informations conformément aux informations de défaillance, et l'envoi des premières informations à d'autres dispositifs nodaux sur l'anneau de protection partagé ODUk, pour amener les autres dispositifs nodaux à mettre en oeuvre une commutation groupée du service interrompu conformément aux premières informations ; et
dans la négative, l'obtention, par le premier dispositif nodal, de secondes informations conformément aux informations de défaillance, et l'envoi des secondes informations aux autres dispositifs nodaux, de telle sorte que les autres dispositifs nodaux mettent en oeuvre une commutation individuelle du service interrompu conformément aux secondes informations ;
dans lequel
le groupe ODUk1 d'ordre élevé prédéfini comprend N sous-groupes ODUk1 d'ordre élevé, dans lequel tous les ODUk1 d'ordre élevé d'un sous-groupe ODUk1 d'ordre élevé entre n'importe quels deux dispositifs nodaux adjacents sur l'anneau de protection partagé ODUk utilisent une même fibre optique de transmission et partagent un même chemin entre un dispositif nodal source et un dispositif nodal destinataire ; chacun des sous-groupes ODUk1 d'ordre élevé a le même nombre de ODUk1 d'ordre élevé, N est le nombre de dispositifs nodaux sur l'anneau de protection partagé ODUk.

2. Procédé selon la revendication 1, dans lequel l'obtention, par le premier dispositif nodal, de premières informations conformément aux informations de défaillance comprend :
l'obtention, par le premier dispositif nodal, informations de liaison défaillante conformément aux informations de défaillance ; et
la construction, par le premier dispositif nodal, de premières informations à l'aide des informations de liaison défaillante et d'un identifiant de premières informations, dans lequel l'identifiant de premières informations est une information relative à une commutation groupée.

3. Procédé selon la revendication 1, dans lequel l'obtention, par le premier dispositif nodal, de secondes informations conformément aux informations de défaillance comprend :
l'obtention, par le premier dispositif nodal, d'informations de carte de ligne défaillante conformément aux informations de défaillance ; et
la construction, par le premier dispositif nodal, de secondes informations à l'aide des informations de carte de ligne défaillante et d'un identifiant de secondes informations, dans lequel l'identifiant de secondes informations est une information relative à une commutation individuelle.

4. Procédé selon l'une quelconque des revendications 1 à 3, dans lequel l'envoi des premières informations à d'autres dispositifs nodaux sur l'anneau de protection partagé ODUk comprend :
l'envoi, par le premier dispositif nodal, des premières informations à un dispositif nodal aval de telle sorte qu'un deuxième dispositif nodal reçoive les premières informations envoyées par un dispositif nodal amont, l'obtention d'une première condition de commutation correspondant aux premières informations conformément aux premières informations, et la détermination qu'une condition de commutation d'une priorité de traitement supérieure à la priorité de traitement de la première condition de commutation existe ou non sur le noeud local ; dans la négative, le transfert des premières informations à un dispositif nodal aval du noeud local ; dans l'affirmative, l'utilisation du noeud local comme premier dispositif nodal et l'exécution de l'étape d'obtention d'informations de défaillance ; de plus, la réception, par le troisième dispositif nodal, des premières informations envoyées par un dispositif nodal amont ; dans lequel, le deuxième dispositif nodal est un dispositif nodal autre que le premier dispositif nodal et le troisième dispositif nodal sur l'anneau de protection partagé ODUk, et le troisième dispositif nodal est un dispositif nodal amont du premier dispositif nodal.

5. Procédé selon la revendication 4, comprenant en outre après la réception, par le troisième dispositif nodal, des premières informations envoyées par un dispositif nodal amont :
l'obtention, par le troisième dispositif nodal, d'une première condition de commutation correspondant aux premières informations conformément aux premières informations, et la détermination qu'une condition de commutation d'une priorité de traitement supérieure à la priorité de traitement de la première condition de commutation existe ou non sur le noeud local ; dans la négative, la génération de premières informations d'acquittement de commutation, l'envoi des premières informations d'acquittement de commutation à un dispositif nodal amont du noeud local, et la mise en oeuvre d'une commutation groupée du service interrompu conformément aux premières informations ; dans l'affirmative, l'utilisation du noeud local comme premier dispositif nodal et l'exécution de l'étape d'obtention d'informations de défaillance ; et
la mise en oeuvre, par le deuxième dispositif nodal, d'une commutation groupée du service interrompu conformément aux premières informations quand le deuxième dispositif nodal reçoit les premières informations d'acquittement de commutation envoyées par un dispositif nodal aval.

6. Procédé selon l'une quelconque des revendications 1 à 3, dans lequel l'envoi des secondes informations aux autres dispositifs nodaux comprend :
l'envoi, par le premier dispositif nodal, des secondes informations à un dispositif nodal aval de telle sorte qu'un deuxième dispositif nodal reçoive les secondes informations envoyées par un dispositif nodal amont, l'obtention d'une seconde condition de commutation correspondant aux secondes informations conformément aux secondes informations, et la détermination qu'une condition de commutation d'une priorité de traitement supérieure à la priorité de traitement de la seconde condition de commutation existe ou non sur le noeud local ; dans la négative, le transfert des secondes informations à un dispositif nodal aval du noeud local ; dans l'affirmative, l'utilisation du noeud local comme premier dispositif nodal et l'exécution de l'étape d'obtention d'informations de défaillance ; de plus, la réception, par le troisième dispositif nodal, des secondes informations envoyées par un dispositif nodal amont ; dans lequel, le deuxième dispositif nodal est un dispositif nodal autre que le premier dispositif nodal et le troisième dispositif nodal sur l'anneau de protection partagé ODUk, et le troisième dispositif nodal est un dispositif nodal amont du premier dispositif nodal.

7. Procédé selon la revendication 6, comprenant en outre après la réception, par le troisième dispositif nodal, des secondes informations envoyées par un dispositif nodal amont :
l'obtention, par le troisième dispositif nodal, d'une seconde condition de commutation correspondant aux secondes informations conformément aux secondes informations, et la détermination qu'une condition de commutation d'une priorité de traitement supérieure à la priorité de traitement de la seconde condition de commutation existe ou non sur le noeud local ; dans la négative, la génération de secondes informations d'acquittement de commutation, l'envoi des secondes informations d'acquittement de commutation à un dispositif nodal amont du noeud local, et la mise en oeuvre d'une commutation individuelle du service interrompu conformément aux secondes informations ; dans l'affirmative, l'utilisation du noeud local comme premier dispositif nodal et l'exécution de l'étape d'obtention d'informations de défaillance ;
la mise en oeuvre, par le deuxième dispositif nodal, d'une commutation individuelle du service interrompu conformément aux secondes informations quand le deuxième dispositif nodal reçoit les secondes informations d'acquittement de commutation envoyées par un dispositif nodal aval.

8. Dispositif nodal, dans lequel le dispositif nodal, parmi tous les dispositifs nodaux qui constituent un anneau de protection partagé d'unité de données de canal optique k, ODUk, est un dispositif nodal qui détecte l'occurrence d'une défaillance, dans lequel le dispositif nodal comprend :
un module d'obtention (501), configuré pour obtenir des informations de défaillance ;
**caractérisé par**
un module de détermination et de traitement (502), configuré pour déterminer que les informations de défaillance sont ou non une condition de commutation d'un groupe ODUk1 d'ordre élevé prédéfini ; dans l'affirmative, obtenir des premières informations conformément aux informations de défaillance et envoyer les premières informations à d'autres dispositifs nodaux sur l'anneau de protection partagé ODUk aux autres dispositifs nodaux pour mettre en oeuvre une commutation groupée du service interrompu conformément aux premières informations ; dans la négative, obtenir des secondes informations conformément aux informations de défaillance et envoyer les secondes informations aux autres dispositifs nodaux de telle sorte que les autres dispositifs nodaux mettent en oeuvre une commutation individuelle du service interrompu conformément aux secondes informations ;
dans lequel
le groupe ODUk1 d'ordre élevé prédéfini comprend N sous-groupes ODUk1 d'ordre élevé, dans lequel tous les ODUk1 d'ordre élevé d'un sous-groupe ODUk1 d'ordre élevé entre n'importe quels deux dispositifs nodaux adjacents sur l'anneau de protection partagé ODUk utilisent une même fibre optique de transmission et partagent un même chemin entre le dispositif nodal et un dispositif nodal destinataire ; chacun des sous-groupes ODUk1 d'ordre élevé a le même nombre d'ODUkl d'ordre élevé, N est le nombre de dispositifs nodaux sur l'anneau de protection partagé ODUk.

9. Dispositif nodal selon la revendication 8, dans lequel le module de détermination et de traitement (502) comprend :
une première unité d'obtention (5021), configurée pour obtenir des informations de liaison défaillante conformément aux informations de défaillance ; et
une première unité de génération (5022), configurée pour construire des premières informations à l'aide des informations de liaison défaillante et d'un identifiant de premières informations, dans lequel l'identifiant de premières informations est une information relative à une commutation groupée.

10. Dispositif nodal selon la revendication 8, dans lequel le module de détermination et de traitement (502) comprend :
une seconde unité d'obtention (5023), configurée pour obtenir des informations de carte de ligne défaillante conformément aux informations de défaillance ; et
une seconde unité de génération (5024), configurée pour construire des secondes informations à l'aide des informations de carte de ligne défaillante et d'un identifiant de secondes informations, dans lequel l'identifiant de secondes informations est une information relative à une commutation individuelle.

11. Système de protection partagée dans un réseau de transport optique, comprenant un premier dispositif nodal (50), un deuxième dispositif nodal (60), et un troisième dispositif nodal (70), dans lequel le premier dispositif nodal (50), le deuxième dispositif nodal (60), et le troisième dispositif nodal (70) sont situés sur un anneau de protection partagé d'unité de données de canal optique k, ODUk et :
le premier dispositif nodal (50) est configuré pour obtenir des informations de défaillance ; le système est **caractérisé en ce que**
le premier dispositif nodal (50) est configuré pour déterminer si les informations de défaillance sont ou non une condition de commutation d'un groupe ODUk1 d'ordre élevé prédéfini ; dans l'affirmative, le premier dispositif nodal (50) obtient des premières informations conformément aux informations de défaillance et envoie les premières informations au deuxième dispositif nodal (60) et au troisième dispositif nodal (70) respectivement, de telle sorte que le deuxième dispositif nodal (60) et le troisième dispositif nodal (70) mettent en oeuvre une commutation groupée du service interrompu conformément aux premières informations, dans lequel, le deuxième dispositif nodal (60) est un dispositif nodal autre que le premier dispositif nodal (50) et le troisième dispositif nodal (70) sur l'anneau de protection partagé ODUk, et le troisième dispositif nodal (70) est un dispositif nodal amont du premier dispositif nodal (50) ; dans la négative, le premier dispositif nodal (50) obtient des secondes informations conformément aux informations de défaillance et envoie les secondes informations au deuxième dispositif nodal (60) et au troisième dispositif nodal (70) respectivement, de telle sorte que le deuxième dispositif nodal (60) et le troisième dispositif nodal (70) mettent en ouvre une commutation individuelle du service interrompu conformément aux secondes informations ;
dans lequel
le groupe ODUk1 d'ordre élevé prédéfini comprend N sous-groupes ODUk1 d'ordre élevé, dans lequel tous les ODUk1 d'ordre élevé d'un sous-groupe ODUk1 d'ordre élevé entre n'importe quels deux dispositifs nodaux adjacents sur l'anneau de protection partagé ODUk utilisent une même fibre optique de transmission et partagent un même chemin entre le premier dispositif nodal (50) et le deuxième dispositif nodal (60) ; chacun des sous-groupes ODUk1 d'ordre élevé a le même nombre d'ODUkl d'ordre élevé, N est le nombre de dispositifs nodaux sur l'anneau de protection partagé ODUk.

12. Système selon la revendication 11, dans lequel : le premier dispositif nodal (50) est configuré spécifiquement pour envoyer les premières informations à un dispositif nodal aval ;
conformément, le deuxième dispositif nodal (60) est configuré pour recevoir les premières informations envoyées par un dispositif nodal amont, obtenir une première condition de commutation correspondant aux premières informations conformément aux premières informations, et déterminer si une condition de commutation d'une priorité de traitement supérieure à la priorité de traitement de la première condition de commutation existe ou non sur le noeud local ; dans la négative, transférer les premières informations à un dispositif nodal aval du noeud local ; dans l'affirmative, utiliser le noeud local comme premier dispositif nodal (50) et exécuter l'étape d'obtention d'informations de défaillance ; et
le troisième dispositif nodal (70) est configuré pour recevoir des premières informations envoyées par un dispositif nodal amont.

13. Système selon la revendication 12, dans lequel le troisième dispositif nodal (70) est configuré en outre pour obtenir une première condition de commutation correspondant aux premières informations conformément aux premières informations, et déterminer si une condition de commutation d'une priorité de traitement supérieure à la priorité de traitement de la première condition de commutation existe ou non sur le noeud local ; dans la négative, générer des premières informations d'acquittement de commutation, envoyer les premières informations d'acquittement de commutation à un dispositif nodal amont du noeud local, et mettre en oeuvre une commutation groupée du service interrompu conformément aux premières informations ; dans l'affirmative, utiliser le noeud local comme premier dispositif nodal (50) et exécuter l'étape d'obtention d'informations de défaillance ; et
conformément, le deuxième dispositif nodal (60) est configuré en outre pour : à la réception des premières informations d'acquittement de commutation envoyées par un dispositif nodal aval, mettre en oeuvre une commutation groupée du service interrompu conformément aux premières informations.

14. Système selon la revendication 13, dans lequel le premier dispositif nodal (50) est configuré spécifiquement pour envoyer les secondes informations à un dispositif nodal aval ;
conformément, le deuxième dispositif nodal (60) est configuré pour recevoir les secondes informations envoyées par un dispositif nodal amont, obtenir une seconde condition de commutation correspondant aux secondes informations conformément aux secondes informations, et déterminer si une condition de commutation d'une priorité de traitement supérieure à la priorité de traitement de la seconde condition de commutation existe ou non sur le noeud local ; dans la négative, transférer les secondes informations à un dispositif nodal aval du noeud local ; dans l'affirmative, utiliser le noeud local comme premier dispositif nodal (50) et exécuter l'étape d'obtention d'informations de défaillance ; dans lequel, le deuxième dispositif nodal (60) est un dispositif nodal autre que le premier dispositif nodal (50) et le troisième dispositif nodal sur l'anneau de protection partagé ODUk, et le troisième dispositif nodal (70) est un dispositif nodal amont du premier dispositif nodal (50) ; et
le troisième dispositif nodal (70) est configuré pour recevoir des secondes informations envoyées par un dispositif nodal amont.
